# EUROPEAN PATENT APPLICATION

(11) **EP 4 811 474 A1**
(43) Date of publication of application: **23.09.2026**
(21) Application number: 25164273.2
(22) Date of filing: 18.03.2025
(51) Int. Cl.: H01M 10/04

(54) **BATTERY MANUFACTURING SYSTEM AND METHOD**

(71) Applicant: LG Energy Solution, Ltd., Seoul 07335 (KR)
(72) Inventor: HUR, Se Hong, 34122 Daejeon (KR); LEE, Seung Lyul, 34122 Daejeon (KR); NA, Ki Hong, 34122 Daejeon (KR); CHANG, Ki Won, 34122 Daejeon (KR)
(74) Representative: Goddar, Heinz J.

(57) **Abstract**

Disclosed is a battery manufacturing system, comprising a processing device configured to process a battery material that is provided as a continuous material, wherein the processing device is configured to process the battery material in successive segments by processing one segment of the battery material at a time before processing a subsequent segment, a transport device configured to advance the battery material in a stepwise manner in a transport direction, alternating between an advancing phase and a resting phase, the resting phase being synchronized with processing of a segment by the processing device, and a sensor device configured to detect a marking object on the battery material in a sensing area, wherein the sensor device is arranged so that the sensing area is located upstream of the processing device in the transport direction and aligned with a boundary between two successive segments of the battery material when the transport device is in the resting phase.

## Description

This application relates to the manufacturing of a battery.

The manufacturing of a battery usually employs processing a battery material in a physical, mechanical and/or chemical manner. In a conventional system and a conventional method, a battery material, i.e., the material to be used for manufacturing of a battery, may be supplied to a processing station at which the battery material is processed in successive and/or subsequent segments. Particularly in an at least partly automated system and method, the battery material may be supplied in a continuous manner, and a marking object may be used to indicate a transition between two successive or subsequent batches (e.g., rolls, stacks, packs, etc.).

In view of this, it seems desirable to further improve the battery manufacturing process in terms of cost, material, energy and time efficiency.

### SUMMARY OF INVENTION

The present invention is defined according to the subject matter of the appended independent claims. Particular embodiments are given by the additional features of the appended dependent claims.

A battery manufacturing system may comprise at least one of: a processing device, a transport device and a sensor device. The processing device may be configured to process a battery material. The processing device may be configured to process the battery material in successive segments by processing one segment of the battery material at a time before processing a subsequent segment. The transport device may be configured to advance the battery material in a stepwise manner in a transport direction (i.e., a direction, along which the battery material is transported to the processing device), alternating between an advancing phase and a resting phase, the resting phase being synchronized with processing of a segment by the processing device. The sensor device may be configured to detect a marking object on the battery material in a sensing area. The sensor device may be arranged so that the sensing area is located upstream of the processing device in the transport direction. The sensing area (and/or the sensor device) may be aligned with a boundary between two successive segments of the battery material when the transport device is in the resting phase.

The battery manufacturing system and method disclosed herein enable the precise detection of a marking object that is provided, indicated, or arranged on the battery material. As a result, the disclosed system and method allow for accurate identification of a specific segment of the battery material provided with the marking object. This may allow for increasing the efficiency of the battery manufacturing, particularly in terms of the cost, energy and time requirements. Furthermore, as also discussed below, the system and method as disclosed herein may allow for reducing waste battery material that is produced during the battery manufacturing.

The battery manufacturing system as used herein may indicate a system of multiple devices configured to manufacture a battery. The battery manufacturing system may be implemented as a single, centralized entity or as a distributed system operating across multiple locations. The battery manufacturing system may be implemented in a plant, particularly in an automated plant, a smart factory or the like. Hence, the present disclosure may also refer to a plant, an automated plant or a smart factory comprising the battery manufacturing system as disclosed herein. The battery manufacturing system may further comprise any one, some or all of the features described hereinafter with respect to the battery manufacturing system, unless indicated otherwise or technically inappropriate. Furthermore, the features described below with respect to a battery manufacturing method may be also applicable to the battery manufacturing system, unless indicated otherwise or technically inappropriate.

The battery as used herein may generally refer to a chemical energy storage device. Unless indicated otherwise or technically inappropriate, the battery as used herein may refer to a primary battery and/or a secondary battery. The battery as referred to herein may be or include any arrangement or packaging type of one or more batteries, for example a battery cell, a battery module or a battery pack, unless indicated otherwise or technically inappropriate. Further, the battery as referred to herein may be or include any specific type of battery cell, for example a coin-type battery cell, a pouch-type battery cell, a cylindrical battery cell, a prismatic battery cell or any combination thereof, unless indicated otherwise or technically inappropriate.

Particularly, the battery as referred to herein may be or include a pouch-type battery. The pouch-type battery may comprise an electrode assembly accommodated in a deformable case. The deformable case may be referred to as a pouch-type case or shortly pouch. The pouch may be made from a multi-layered laminated film, for example by deep drawing a flexible laminate film. The flexible laminate film may include one or more metal-containing layer and one, two or more polymer layers laminated together.

The battery material may generally refer to any material used for the manufacturing of a battery as known in the art. In particular, the battery material as used herein may be or include a pouch film. The battery material, for example the pouch film, may be or include a multi-layered laminated film configured for manufacturing a pouch. The battery material, for example the pouch film, may include one or more of: an aluminum layer, a polyethylene terephthalate (PET) layer, a nylon layer, a polypropylene (PP) layer and a polyethylene (PE) layer. Any of the aforementioned layers may be present in plurality in the battery material (or the pouch film). In a specific example, the battery material may include an aluminum layer and a PP and/or PE layer on one side of the aluminum layer and a PET and/or nylon layer on the other side of the aluminum layer.

Alternatively or additionally, the battery material may be or include a substrate for an electrode. For example, the substrate may be or be made of a metal sheet. In particular examples, the battery material may be or include a copper sheet and/or an aluminum sheet.

The battery material, particularly a pouch film or a metal sheet, may be provided as a continuous material and/or in a continuous (uninterrupted, unbroken) form. As such, the battery material may be provided in a constant stream, for example by being spooled or rolled. The battery material may be supplied or delivered in a continuous form, for example on a roll, reel, spool or coil. The terms continuous material or continuous form may be used herein as opposed to being provided as individual pieces, discrete sections, or batch packs. For example, the battery material, particularly the pouch film, may be provided as a continuous material wound on one or more rolls. Such rolls may be referred to herein as one or more rolls of battery material.

The processing device may be configured to process the battery material. The processing device may be configured to process the battery material in successive segments by processing one segment of the battery material at a time before processing a subsequent segment. In other words, the processing device may be configured to process the battery material in a manner that one segment of the battery material is fully processed (i.e., the processing is completed) before processing a subsequent segment of the battery material. In yet other words, the processing device may be configured to process (multiple, a plurality of, a sequence of) segments of the battery material individually and in a successive order. The processing device may be configured to process each of the segments of the battery material in an identical manner. This feature may also be referred to as processing the battery material on a segment-by-segment basis or processing the battery material segment by segment. The processing device may further comprise any one, some or all of the features described hereinafter with respect to the processing device, unless indicated otherwise or technically inappropriate.

The battery material may be (configured to be) divided into successive segments. The battery material may be physically divided into successive segments. For example, the battery material may be deformed, notched, folded, indented, stamped, punched, partly cut, or the like so as to form a boundary between two subsequent segments. Alternatively or additionally, the battery material may be operatively divided into successive segments so that the battery manufacturing system recognizes a boundary between two subsequent segments. For example, the battery material may be divided into segments based on a physical dimension, for example a length of a pouch to be produced in a transport direction. The battery material may be divided into segments based on a processing zone, for example an area processed by the processing device at a time. For example, the battery material may be divided into segments based on a time interval, for example a duration of a transport phase in which the transport device advances the battery material to the processing device at a time.

The processing device may be configured to process the battery material in a physical, mechanical and/or chemical manner. In specific examples, the processing device may be configured to process the battery material so that the battery material is deformed in a specific manner. For example, the processing device may be configured to deform the battery material so as to change the shape of the battery material. In specific examples, the processing device may be configured to deform a segment of the battery material to a pouch by pressing a punch against a lower forming die with the segment of the battery material being positioned therebetween. The punch and the lower forming die may be dimensioned and shaped according to a shape and dimensions of a pouch to be manufactured. The battery material may be or include a pouch film. Additionally or alternatively, the processing device may be configured to deform, re-shape, apply a coating, dry, compress, cut, assemble or perform any other processing step to (a segment of) the battery material.

In specific examples, the processing device may comprise a forming die to deform the battery material to one or more pouches. The processing device may be configured to process one segment of the battery material at a time, thereby producing one pouch at a time. In other words, one segment of the battery material as used herein may correspond to one pouch. In specific examples, the processing device may be configured to deep draw the battery material, which may be or include a pouch film, so as to obtain the structural features of a pouch. In addition, the battery manufacturing system may further comprise a separation device configured to cut the battery material into separate pouches after being processed by the processing device.

In other examples, the processing device may be configured to process the battery material which is or includes a substrate for an electrode. In such examples, a, each or one segment of the battery material as used herein may be or include one electrode substrate of a battery cell.

The transport device may be configured to advance the battery material in a stepwise manner in a transport direction, alternating between an advancing phase and a resting phase, the resting phase being synchronized with processing of a segment of the battery material by the processing device. The transport may be configured to transport, move or advance the battery material to the processing device along the transport direction. The transport device may be configured to advance the battery material in a discrete motion, intermittently or alternatingly between the advancing phase and the resting phase.

For example, the transport device may be configured to advance the battery material to the processing device during the advancing phase. The transport device may be configured to advance the battery material to the processing device by a length of a single segment at a time (i.e., during a single advancing phase) in the transport direction. The advancing phase may be synchronized with the processing device interrupting the processing of the battery material.

The transport device may be configured to hold the battery material in position, i.e., without advancing to the processing device, during the resting phase. The resting phase may be synchronized with the processing device processing a segment of the battery material. In other words, the processing device may be configured to process the battery material, particularly one segment of the battery material, while the transport device is in the resting phase and holds the battery material in position.

Accordingly, the transport device may be configured to move the battery material to the processing device while the processing device interrupts processing the battery material. In particular, the transport device may be configured to move an amount of the battery material corresponding to one segment at a time to the processing device. Here, the battery material may be divided into successive segment in a manner as described above. Accordingly, the transport device and the processing device operate in combination to process the battery material in successive segments. The transport device may further comprise any one, some or all of the features described hereinafter with respect to the transport device, unless indicated otherwise or technically inappropriate.

Herein, the transport direction may be defined as the direction along which the transport device transports the battery material, particularly to the processing device. The transport device may be configured to advance (move, transport, convey) the battery material along a linear transport path, a curved transport path, or along a transport path that includes one or more linear sections and one or more curved sections. Additionally or alternatively, the transport path may include ascending and/or descending with respect to the gravitational force. Herein, the expressions "in" the transport direction and "in terms of" the transport direction may be used interchangeably to indicate a direction along which the battery material M is transported (and processed).

The transport device may comprise a conveyor system, which may include a conveyor belt, one or more conveyor rollers or the like, to move the battery material to the processing device in the transport direction. Alternatively or additionally, the transport device may comprise a guided rail system, which may for example employ a linear track and/or a robotic arm, to move the battery material to the processing device in the transport direction. Alternatively or additionally, the transport device may comprise a tension-controlled feed system, which may for example employ a winder and unwinder, to move the battery material to the processing device in the transport direction. Alternatively or additionally, the transport device may comprise a mechanism driven by a stepper motor to move the battery material to the processing device in the transport direction. Alternatively or additionally, the transport device may comprise a vacuum or friction-based transport system to move the battery material to the processing device in the transport direction.

The transport device may further comprise one or more servo motors, one or more pneumatic actuators and/or one or more programmable logic controllers (PLCs) to perform the transport of the battery material to the processing device in the transport direction. The transport device may also be referred to as a battery material feed system and/or a stepwise advance system for the battery material.

The sensor device may be configured to detect a marking object on the battery material in a sensing area. The sensor device may be arranged so that the sensing area is located upstream of the processing device in the transport direction and aligned with a boundary between two successive segments of the battery material when the transport device is in the resting phase. Alternatively or additionally, the sensor device may be arranged so that the sensing area covers a boundary between two successive segments of the battery material when the transport device is in the resting phase. The sensor device may further comprise any one, some or all of the features described hereinafter with respect to the sensor device, unless indicated otherwise or technically inappropriate.

The marking object may be an object and/or a marking provided on the outside, particularly on an outside surface of the battery material. The marking object may be detectable optically, visually or in any other suitable manner by the sensor device. For example, the marking object may be or include at least one of a barcode, a QR code, a fiducial mark, a specific height variation, a thermal ink and infrared-reflective material. Additionally or alternatively, the marking object may be or include a mark or spot that is optically or visually detectable in a specific wavelength range, for example by being provided in a specific color (red, green, blue, yellow, etc.). Additionally or alternatively, the marking object may be or include a mark or spot, for example a black mark or black spot, that is optically or visually detectable by a change of reflectance over a threshold, i.e., by occurrence of a predefined contrast.

The sensor device may be an apparatus or a system configured to detect the marking object in the sensing area. The sensor device may employ any proper sensing technology to detect the marking object. In specific examples, the sensor device may include an optical sensor, such as a camera, a vision system, a photodetector or the like. For example, the sensor device may be configured to detect the marking object in a contrast-based manner, by optically recognizing a barcode, a QR code, a fiducial mark or the like on the battery material. Alternatively or additionally, the sensor device may include a laser sensor. For example, the sensor device may be configured to detect the marking object by means of triangulation, time-of-flight sensing, or the like. For examples, the sensor device may be configured to detect the marking object through height variations on the battery material using a laser displacement sensor. Alternatively or additionally, the sensor device may include an infrared or thermal sensor. For example, the marking object may be or include a thermal ink or infrared-reflective material, and the sensor device may be configured to detect the marking object through a heat-sensitive sensor, for example an inductive proximity sensor.

In specific examples, the sensor device may be configured to detect a change of reflectance, in particular occurrence of a predefined contrast, in a specific wavelength range (e.g., in case of the marking object being or including a mark or spot of a specific color). For example, the sensor device may be configured to detect the marking object, which is provided as a green adhesive tape on the battery material, in response to a change of a reflectance intensity in the wavelength range of 500 to 570 nm exceeding a predefined threshold, which may be 10%, 15%, 20%, 30% or 50%. The same may apply correspondingly to other examples where the marking object may be or include an adhesive tape of a different color.

In specific examples, the marking object may be or include an adhesive tape attached on a surface of the battery material. The adhesive tape may have a specific color to be detectable by the sensor device in a specific wavelength range. For example, the adhesive tape may have a green color that is optically detectable in a wavelength range of 500 - 570 nm. For example, the adhesive tape may have a red color that is optically detectable in a wavelength range of 610 - 700 nm. For example, the adhesive tape may have a blue color that is optically detectable in a wavelength range of 440 - 490 nm. For example, the adhesive tape may have a yellow color that is optically detectable in a wavelength range of 570 - 600 nm. In another example, the adhesive tape may be a black tape that has a light reflectance of less than 15% in the visible light wavelength spectrum of 380 to 700 nm.

In examples where the marking object is or includes a black mark or a black spot or a black tape, the sensor device may be configured to detect a change of reflectance, in particular occurrence of a predefined contrast, in an arbitrary wavelength range between 380 and 700 nm. For example, the sensor device may be configured to detect the marking object, which is provided as a black adhesive tape on the battery material, in response to a change of a reflectance intensity in an arbitrary wavelength range between 380 and 700 nm exceeding a predefined threshold, which may be 10%, 15%, 20%, 30% or 50%.

In specific examples, the marking object may be indicative of a transition between two rolls of battery material. Where the battery material is provided as a continuous material, for example on multiple rolls of battery material as described above, a replacement process may be performed to replace a depleting roll of battery material that is presently in use may be replaced with a new (full) roll of battery material without interrupting the operations of the transport device and the processing device. For example, the replacement process of the rolls of battery material may include: adhering a starting end of the new roll of battery material to a final portion of a depleting roll of battery material that is presently in use, i.e., from which the battery material is supplied to the processing device; by means of adhesion, pulling the starting end of the new roll of battery material along with the final portion of the depleting roll of battery material toward the processing device; and removing the depleted roll of battery material. Here, the starting end of the new roll of battery material may be adhered to the final portion of a depleting roll of battery material using an adhesive tape, which may be or be part of the marking object as disclosed herein.

Moreover, the replacement process of the rolls of battery material may further comprise transporting the battery material to the processing device from a buffer while adhering the starting end of the new roll of battery material to the final portion of the depleting roll of battery material. Accordingly, the battery material may be advanced to the processing device without unwinding the depleting roll of battery material, thereby providing a period of time for adhering the starting end of the new roll of battery material to the final portion of the depleting roll of battery material. For example, said buffer may be provided by one or more accumulator rollers. The one or more accumulator rollers may be arranged between the roll of battery material and the processing device and configured to support the battery material and maintain tension along the battery material. During operation, the one or more accumulator rollers may be maintained at a default position. While adhering the starting end of the new roll of battery material to the final portion of the depleting roll of battery material, the one or more accumulator rollers may be moved so as to reduce a distance between the depleting roll of battery material and the processing device, thus consuming the battery material without unwinding the roll of battery material. In this manner, the one or more accumulator rollers may be used as a buffer of the battery material to enable the adhesion of the starting end of the new roll of battery material to the final portion of the depleting roll of battery material without interrupting operations of the transport device and the processing device.

Additionally or alternatively, the marking object may be or comprise a mark that is indicative of a transition within a roll of battery material. The roll of battery material may be composed of two or more sections of battery material that are connected to one another, for example using an adhesive tape. Such an adhesive tape may be provided as described above, for example having a specific color or as a black tape, and the sensor device may be configured accordingly to detect such adhesive tape as marking object.

The sensing area as used herein may refer to an area, a region or a zone within which the sensor device is capable of detecting the marking object on the battery material. The sensing area may represent a specific spatial region in which the sensor device is functionally effective in recognizing the marking object, particularly on the battery material. The sensing area may be located upstream of the processing device in (i.e., in terms of) the transport direction. This allows detection of the marking object to occur before the battery material reaches the processing device. The size and shape of the sensing area may depend on the detection resolution and accuracy of the sensor device.

Furthermore, the sensing area may be aligned with a boundary between two successive segments of the battery material. Accordingly, the sensor may be capable of detecting the marking object at a transition (e.g., dividing line, partition position) between two segments. Alternatively or additionally, the sensing area may cover a boundary between two successive segments of the battery material.

The battery manufacturing system as disclosed herein enables precise detection of the marking object on the battery material. Compared to a system that either does not detect a marking object or detects it at an arbitrary position, the battery manufacturing system as disclosed herein allows for a more accurate determination of whether a marking object is present on a specific segment of the battery material. Accordingly, if using a segment of the battery material containing a marking object is undesirable - such as when the marking object is or includes an adhesive tape used to connect different batches (i.e., different rolls, different pieces, etc.) of the battery material, the battery manufacturing system effectively identifies such segments. Such segments may be discarded from further use in battery manufacturing. Accordingly, the efficiency of the battery manufacturing, particularly in terms of the cost, energy and time requirements, may be increased. Furthermore, as also discussed below, the system and method as disclosed herein may allow for reducing waste battery material that is produced during the battery manufacturing.

In some examples, the battery manufacturing system may further comprise an offset sensor device configured to detect the marking object on the battery material at an offset sensing area. The offset sensing area may be located upstream of the processing device in the transport direction. The offset sensing area may be located upstream of the sensing area. Alternatively, the offset sensing area may be located downstream of the sensing area.

The offset sensor device may be configured in a manner similar to the sensor device. The features described herein with respect to the sensor device may also apply to the offset sensor device, unless indicated otherwise or technically inappropriate. The offset sensor device may further comprise any one, some or all of the features described hereinafter with respect to the offset sensor device, unless indicated otherwise or technically inappropriate.

The offset sensor device may be an apparatus or a system configured to detect the marking object in the sensing area. The offset sensor device may employ any proper sensing technology to detect the marking object. In specific examples, the offset sensor device may include an optical sensor, such as a camera, a vision system, a photodetector or the like. For example, the offset sensor device may be configured to detect the marking object in a contrast-based manner, by optically recognizing a barcode, a QR code, a fiducial mark or the like on the battery material. Alternatively or additionally, the offset sensor device may include a laser sensor. For example, the offset sensor device may be configured to detect the marking object by means of triangulation, time-of-flight sensing, or the like. For examples, the offset sensor device may be configured to detect the marking object through height variations on the battery material using a laser displacement sensor. Alternatively or additionally, the offset sensor device may include an infrared or thermal sensor. For example, the marking object may be or include a thermal ink or infrared-reflective material, and the offset sensor device may be configured to detect the marking object through a heat-sensitive sensor, for example an inductive proximity sensor.

In specific examples, the offset sensor device may be configured to detect a change of reflectance, in particular occurrence of a predefined contrast, in a specific wavelength range (e.g., in case of the marking object being or including a mark or spot of a specific color). For example, the offset sensor device may be configured to detect the marking object, which is provided as a green adhesive tape on the battery material, in response to a change of a reflectance intensity in the wavelength range of 500 to 570 nm exceeding a predefined threshold, which may be 10%, 15%, 20%, 30% or 50%. The same may apply correspondingly to other examples where the marking object may be or include an adhesive tape of a different color.

The offset sensing area may be as described above with respect to the sensing area, unless indicated otherwise or technically inappropriate. The offset sensing area may refer to an area, a region or a zone within which the offset sensor device is capable of detecting the marking object on the battery material. The offset sensing area may represent a specific spatial region in which the offset sensor device is functionally effective in recognizing the marking object, particularly on the battery material. The offset sensing area may be located upstream of the processing device in (i.e., in terms of) the transport direction. This allows detection of the marking object to occur before the battery material reaches the processing device. The size and shape of the offset sensing area may depend on the detection resolution and accuracy of the offset sensor device.

In particular, the offset sensor device may be arranged so that the offset sensing area is distanced (i.e., offset) from the sensing area in the transport direction. Generally, the offset sensor device may be arranged so that the offset sensing area is located upstream or downstream of the sensing area in the transport direction. If the offset sensing area is located upstream of the sensing area in the transport direction, the sensing area may be distanced from the processing device by at least one length of a single segment of the battery material in the transport direction. If the offset sensing area is located downstream of the sensing area in the transport direction, the offset sensing area my be distanced from the processing device by at least one length of a single segment of the battery material in the transport direction.

The length of a single segment of the battery material may be predefined according to a battery to be manufactured by the battery manufacturing system. In specific examples, the length of a single segment of the battery material may be or correspond to a length or a width of a pouch of a pouch-type battery cell. In particular, length of a single segment of the battery material may be defined by a length of the battery material that is processed by the processing device at a time. Accordingly, the length of a single segment of the battery material may be defined according to a setting of the processing device.

The use of the offset sensor device in addition to the sensor device may further increase the accuracy of detecting the segment(s) that carries or carry the marking object.

In some examples, the offset sensing area may be distanced from the sensing area by an offset distance that is smaller than a length of a single segment of the battery material in the transport direction. Herein, the offset distance may indicate a distance between the sensing area and the offset sensing area in the transport direction. As described herein, the transport device may advance the battery material to the processing device by a length of a single segment at a time (i.e., during a single advancing phase) in the transport direction.

With the offset distance being smaller than the length of a single segment of the battery material in the transport direction, individually sensing the marking object by both the sensor device and the offset device may increase the accuracy of determining which segment of the battery material carries the marking object.

In some examples, the battery manufacturing system may further comprise a control unit. The control unit may be configured to output, upon detecting the marking object on the battery material during an advancing phase, that one segment of the battery material which has been advanced past the sensing area during the advancing phase carries the marking object. Additionally or alternatively, the control unit may be configured to output, upon detecting the marking object on the battery material during an advancing phase, that another one segment of the battery material that successively follows the one segment of the battery material, which has been advanced past the sensing area during the advancing phase, carries the marking object.

Accordingly, the battery manufacturing system may be able to determine whether said segment(s) of battery material carries or carry the marking object with or without the offset sensor device as disclosed herein.

In some examples, the offset sensing area may be located upstream of the processing device in the transport direction and upstream of the sensing area in terms of the transport direction. The battery manufacturing system may further comprise a control unit. In such an example, if both the sensor device and the offset sensor device detect the marking object during an advancing phase, an output may be that the segment of the battery material that has passed the sensing area in that advancing phase carries the marking object. Furthermore, if the offset sensor device detects the marking object during an advancing phase without the sensor device detecting it, an output may be that the marking object is located between the sensing area and the offset sensing area, and that the segment of the battery material that covers an area between the sensing area and the offset sensing area during a subsequent resting phase carries the marking object. Furthermore, if both the offset sensor device and the sensor device detect the marking object during an advancing phase and the sensor device detects the marking object in a lasting manner during a subsequent resting phase, an output may be that the marking object extends over both segments of the battery material that are contiguous to the boundary with which the sensing area is aligned during this resting phase.

In this manner, the use of the offset sensor device in addition to the sensor device may even further increase the accuracy of detecting the segment(s) that carries or carry the marking object.

In another example, the offset sensing area may be located upstream of the processing device in the transport direction and downstream of the sensing area in terms of the transport direction. The battery manufacturing system may further comprise a control unit. In this example, if both the sensor device and the offset sensor device detect the marking object during an advancing phase, an output may be that the segment of the battery material that covers an area between the sensing area and the offset sensing area during a subsequent resting phase carries the marking object. Furthermore, if the sensor device detects the marking object during an advancing phase without the offset sensor device detecting it, an output may be that the marking object is located between the offset sensing area and the sensing area, and that the segment of the battery material that covers an area between the sensing area and the offset sensing area during a subsequent resting phase carries the marking object. Furthermore, if the sensor device detects the marking object in a lasting manner during a subsequent resting phase, an output may be that the marking object extends over both segments of the battery material that are contiguous to the boundary with which the sensing area is aligned during this resting phase.

In this manner, the use of the offset sensor device in addition to the sensor device may even further increase the accuracy of detecting the segment(s) that carries or carry the marking object.

In some examples, the battery manufacturing system may further comprise a segmentation device configured to deform and/or cut the battery material into successive segments.

Moreover, the segmentation device may be configured to cut or separate the battery material into segments. Additionally or alternatively, the segmentation device may be configured to deform the battery material, for example by notching, folding, indentation, stamping, punching, partly cutting or the like. The segmentation device may facilitate a physical separation of the battery material into successive segments.

In some examples, the battery manufacturing system may further comprise a supporting device configured to support the battery material in the sensing area. In particular, the supporting device may comprise one or more plate-shaped elements to provide one or more flat supporting surfaces on which the battery material may rest. In specific examples, the supporting device may include one or more blocks and/or one or more grippers configured to support the battery material in the sensing area. Supporting the battery material using the supporting device may increase a flatness of the battery material in the sensing area and thus increase the accuracy of detection of the marking object in the sensing area.

In some examples, the sensor device may comprise one optical sensor configured to measure a light intensity reflected at the battery material and the marking object in the sensing area.

The sensor device may comprise two or more light intensity sensors configured to measure a light intensity reflected at the battery material in the sensing area. The optical sensor(s) may be configured as described in detail above. In particular, the optical sensor may be or include a camera, a vision system, a photodetector or the like. The optical sensor (s) may be configured to detect a change of reflectance, in particular occurrence of a predefined contrast, in a specific wavelength range (e.g., in case of the marking object being or including a mark or spot of a specific color). For example, the optical sensor(s) may be configured to detect the marking object, which may be provided as a green adhesive tape on the battery material, in response to a change of a reflectance intensity in the wavelength range of 500 to 570 nm exceeding a predefined threshold, which may be 10%, 15%, 20%, 30% or 50%. The same may apply correspondingly to other examples where the marking object may be or include an adhesive tape of a different color.

Having two or more optical sensors may further increase the accuracy of detecting the marking object in the sensing area.

In specific examples, the battery manufacturing system may be configured to replace a (depleting) roll of battery material, from which the battery material is transported to the processing device, with a new roll of battery material before the roll of battery material is depleted.

In some examples, the battery material may be or include a pouch film provided in a continuous form. In such examples, the processing device may comprise a pouch forming die configured to deform a pouch film of a battery.

The battery material and the pouch film may be provided as described above. In particular, the pouch film may be provided in a continuous form wound on one or more rolls of pouch film. The pouch film may be made of a laminate as described above. The pouch forming die may be configured to deform the pouch film so as to change the shape of the pouch film. In specific examples, the pouch forming die may comprise a punch and a lower forming die. The pouch forming die may be configured to deform a segment of the pouch film (i.e., of the battery material) to a pouch by pressing the punch against the lower forming die with the segment being positioned therebetween. The punch and the lower forming die may be dimensioned and shaped according to a shape and dimensions of a pouch to be manufactured.

Accordingly, the battery manufacturing system as disclosed herein may achieve the technical effects and the advantages specifically for manufacturing one or more pouches.

Further disclosed herein is a battery manufacturing method. The battery manufacturing method may be carried out using the battery manufacturing system as disclosed herein. The battery manufacturing method may incorporate any one, some or all of the features of the battery manufacturing system as disclosed herein, unless indicated otherwise or technically inappropriate. Similarly, the battery manufacturing system may be configured to carry out the battery manufacturing method as disclosed herein. The battery manufacturing system may incorporate any one, some or all of the features of the battery manufacturing method as disclosed herein, unless indicated otherwise or technically inappropriate.

A battery manufacturing method may comprise providing a battery material as a continuous material. The battery material and the feature of the battery material being provided as a continuous material may be as described above with respect to the battery manufacturing system.

The battery manufacturing method may comprise processing the battery material in successive segments by processing one segment of the battery material at a time before processing a subsequent segment. The feature of processing the battery material may be as described above with respect to the battery manufacturing system. The feature of processing the battery material in successive segments by processing one segment of the battery material at a time before processing a subsequent segment may be as described above with respect to the battery manufacturing system. In particular, the processing may be performed by the processing device as described above.

The battery manufacturing method may comprise advancing the battery material in a stepwise manner in a transport direction, alternating between an advancing phase and a resting phase, the resting phase being synchronized with the processing of the battery material. The feature of advancing the battery material in said manner may be performed as described above with respect to the battery manufacturing system. The features regarding any of the stepwise advancing the battery material, the advancing phase and the resting phase and the alternating therebetween may be as described above with respect to the battery manufacturing system. In particular, the advancing of the battery material may be performed by the transport device as described above.

The battery manufacturing method may comprise determining whether a marking object on the battery material is detected in a sensing area that is located prior to the processing of the battery material and aligned with a boundary between two successive segments of the battery material in the resting phase. The feature of detecting the marking object in the sensing area may be performed as described above with respect to the battery manufacturing system. The features regarding the marking object, sensing area and the positioning thereof may be as described above with respect to the battery manufacturing system. In particular, said determining may be performed by a control unit as described herein. The detecting of the marking object in the sensing area may be performed by the sensor device as described herein. Specifically, the sensing area may be aligned to the boundary between two successive segments of the battery material in the resting phase by arranging the sensor device in a manner described herein.

The battery manufacturing method as disclosed herein may enable precise detection of the marking object on the battery material. Compared to a method that either does not detect a marking object or detects it at an arbitrary position, the battery manufacturing method as disclosed herein may allow for a more accurate determination of whether a marking object is present on a specific segment of the battery material. Accordingly, if using a segment of the battery material containing a marking object is undesirable - such as when the marking object is or includes an adhesive tape used to connect different batches (i.e., different rolls, different pieces, etc.) of the battery material, the battery manufacturing method may allow for effectively identifying such segments that may be discarded from further use in battery manufacturing. Accordingly, the efficiency of the battery manufacturing, particularly in terms of the cost, energy and time requirements, may be increased. Furthermore, the method as disclosed herein may allow for reducing waste battery material that is produced during the battery manufacturing.

In some examples. the battery manufacturing method may further comprise outputting, if detecting the marking object on the battery material during an advancing phase, (i) that one segment of the battery material which has been advanced past the sensing area during the advancing phase carries the marking object; and/or (ii) that another one segment of the battery material that successively follows said one segment of the battery material carries the marking object.

Such outputting may be performed by a control unit. The outputs and conditions therefore may be as described above with respect to the battery manufacturing system. Accordingly, the precision of detecting a particular segment of the battery material that carries the marking object may be increased.

In some examples, the battery manufacturing method may further comprise determining whether the marking object is detected at an offset sensing area. The offset sensing area may be located upstream of the processing device. The offset sensing area may be located upstream or downstream of the sensing area in the transport direction. The offset sensing area may be distanced from the sensing area by an offset distance that is smaller than a length of a single segment of the battery material in the transport direction.

The features regarding the offset sensing area and its positioning may be as described above. In particular, the detecting of the marking object in the offset sensing area may be performed using the offset sensor device as described herein.

Enabling the detection of the marking object in the offset sensing area in addition to the detection in the sensing area may further increase the precision of detecting a particular segment of the battery material that carries the marking object in the above-described manner.

In some examples, the offset sensing area may be located upstream of the sensing area in the transport direction. In such examples, the battery manufacturing method may comprise outputting, if the sensor device and the offset sensor device both detect the marking object during an advancing phase, that the segment of the battery material which has passed the sensing area in that advancing phase carries the marking object. Alternatively or additionally, the battery manufacturing method may comprise outputting, if the offset sensor device detects the marking object during an advancing phase without the sensor device detecting the marking object, that the marking object is located between the sensing area and the offset sensing area, and that the segment of the battery material that covers an area between the sensing area and the offset sensing area during a subsequent resting phase carries the marking object. Alternatively or additionally, the battery manufacturing method may comprise outputting, if the offset sensor device and the sensor device both detect the marking object during an advancing phase and the sensor device detects the marking object in a lasting manner during a subsequent resting phase, that the marking object extends over both segments of the battery material that are contiguous to the boundary with which the sensing area is aligned during this resting phase.

Such outputting may be performed by a control unit as described herein. The outputs and conditions therefore may be as described above with respect to the battery manufacturing system. Accordingly, the precision of detecting a particular segment of the battery material that carries the marking object may be increased.

Further disclosed herein is a battery that is manufactured using the battery manufacturing system as disclosed herein, and/or by the battery manufacturing method as disclosed herein. As mentioned, the term battery may generally refer to any types or packaging and organization, and may for example refer to a battery cell, particularly a pouch-type battery cell, or a battery module or a battery pack if applicable.

### BRIEF DESCRIPTION OF DRAWINGS

The accompanying drawings illustrate some particular examples and are intended to help understanding the present invention. Herein and in the drawings, a same reference sign or a series of reference signs may be used in different examples to indicate a same, similar or analogical element.
FIG. 1 shows a schematic view of a battery manufacturing system 100 according to an example.
FIG. 2 shows a schematic view of a battery manufacturing system 100 according to an example.
FIG. 3A to 3C show schematic views of a battery manufacturing system according to examples.
FIG. 4A to 4C show schematic views of a battery manufacturing system according to examples.
FIG. 5A to 5C show schematic views of one or more sensing areas with respect to a battery material in a plan view according to examples.
FIG. 6 shows a schematic view of a battery manufacturing system according to an example.
FIG. 7 shows a flow chart of a battery manufacturing method according to an example.

### DETAILED DESCRIPTION

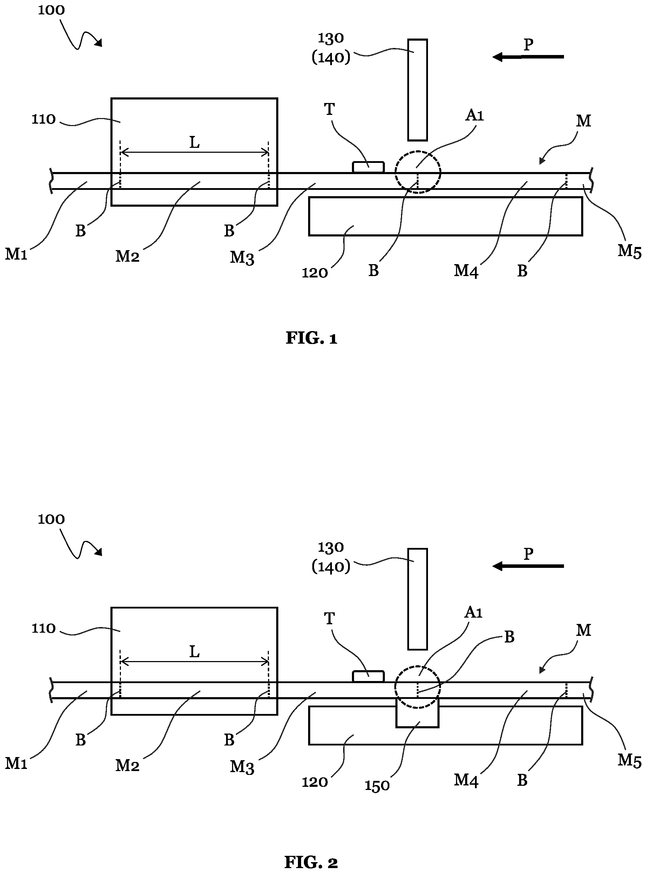

FIG. 1 shows a schematic view of a battery manufacturing system 100 according to an example. The battery manufacturing system 100 may be provided as described above. The battery manufacturing system 100 may comprise a processing device 100, a transport device 120 and a sensor device 130. Specifically, FIG. 1 shows the battery manufacturing system 100 during a resting phase as described herein.

The processing device 110 may be configured to process a battery material M that is provided as a continuous material. The processing device 110 may be configured to process the battery material M in successive segments M1-M5 by processing one segment, for example a segment M2 as depicted in FIG. 1, of the battery material M at a time before processing a subsequent segment, for example segment M3 as depicted in FIG. 1. The processing device 110 may be provided as described above. In particular, the processing device 110 may be or comprise a pouch forming die as described herein.

The battery material M and the successive segments M1-M5 may be provided as described above. In particular, the battery material M may be or include a pouch film M that is to be deformed into one or more pouches (not explicitly shown). As shown in FIG. 1, the battery material M may be provided as a continuous material. The battery material M may be divided into successive (i.e., without interruptions) segments M1-M5 of a uniform length L in the transport direction P. Boundaries B indicate a transition between two successive (subsequent) segments M1-M5. The Boundaries B may be physically formed, for example by deforming, indenting, folding, notching, partly cutting, or the like, or in any other manner as described herein. Additionally or alternatively, the boundaries B may be visibly formed, for example by marking, highlighting or any other means suitable. In particular, the boundaries B may indicate a line at which the respective segment M1-M5 is to be separated (e.g., by cutting, tearing, detaching or the like) from the rest of continuous battery material after being processed by the processing device 110.

In optional examples, the battery manufacturing system 100 may further comprise a segmentation device 140 configured to deform and/or (partly) cut the battery material M into successive segments M1-M5. Although a boundary B is depicted between segments M4 and M5 in FIG. 1, this may be illustrative (and operative) only. In examples, a boundary B may become physical and/or visible after being deformed and/or (partly) cut by the segmentation device 140. The segmentation device 140 may also be referred to as a slit cut device. The sensor device 130 may be arranged at, near or on the segmentation device 140, as symbolized by the reference numerals in FIG. 1.

The transport device 120 may be configured to advance the battery material M in a stepwise manner in a transport direction P, alternating between an advancing phase and a resting phase, the resting phase being synchronized with processing of a segment M1-M5 by the processing device 110. The transport device 120 may be provided as descried above. In particular, the transport device may be or include a stepwise advancing system employing one or more conveyor belts, a tension-controlled feed system including a winder and unwinder and/or one or more rollers to advance the battery material M in the transport direction P.

The configuration and operation of the transport device 120 may be as described above. In particular, the transport device 120 may be configured to advance the battery material M one segment M1-M5 at a time to the processing device 110 during the advancing phase. In other words, the transport device 120 may be configured to advance the battery material M by the length L at a time during a single advancing phase. Each advancing phase may be interrupted by a subsequent resting phase. During the resting phase, the processing device 110 processes the battery material M, i.e., the segment M2 of the battery material M that has been positioned in or at the processing device 110 during the previous advancing phase.

Thereafter, during the advancing phase, the segment M2 of the battery material M that has been processed by the processing device 110 is discharged from the processing device 110 and a subsequent segment M3 is positioned in or at the processing device 110. The segment M1 that has been processed by the processing device 110 and has been discharged therefrom may be separated from the rest of the battery material M, particularly from the subsequent segment M2, in the manner described above.

The sensor device 130 may be configured to detect a marking object T on the battery material M in a sensing area A1. The sensor device 130 may be provided, configured and/or arranged as described above. For example, the sensor device 130 may be configured to detect an occurrence of a contrast, i.e., change of a reflected light intensity above a threshold, within the sensing area A1. The wavelength range and threshold for the detection of the marking object T by the sensor device 130 may be as described above.

As mentioned, FIG. 1 shows the battery manufacturing system 100 in the resting phase. The sensor device 130 is arranged so that the sensing area A1 is located upstream (i.e., in a position opposite to the transport direction P) of the processing device 110 in the transport direction P. The sensing area A1 is aligned with the boundary B between two successive segments M3, M4 of the battery material M, while the transport device 110 is in the resting phase as shown in FIG. 1.

As such, the sensor device 130 detecting the marking object T during the resting phase of the transport device 120 may enable a precise determination as to which segment M1-M5 of the battery material M carries the marking object T.

Although not explicitly shown in FIG. 1, the battery manufacturing system 100 may further comprise a control unit. The control unit may be configured to output, upon detecting the marking object T on the battery material M during an advancing phase, that one segment (i.e., the segment M3 in FIG. 1) of the battery material M which has been advanced past the sensing area A1 during the advancing phase carries the marking object T.

In addition, it may occur that the sensor device 130 detects the marking object T during an advancing phase and detects the marking object T in a lasting manner during the resting phase that follows this advancing phase. In such case, the control unit may output that the one segment (i.e., the segment M3) of the battery material M which has been advanced past the sensing area A1 during the advancing phase, and the subsequent segment (i.e., the segment M4) both carry the marking object T, i.e., that the marking object T extends over both segments M3 and M4.

As discussed above, it may be desirable that the one or more segments carrying the marking object T (in other words, the one or more segments on which the marking object T is present) be discarded from further use in manufacturing of a battery. Hence, the battery manufacturing system 100 may contribute to reducing material waste, cost, and time and energy consumption for the battery manufacturing.

FIG. 2 shows a schematic view of a battery manufacturing system 100 according to an example. The battery manufacturing system 100 of FIG. 2 may be provided as described above and comprise the features of the battery manufacturing system 100 as described above in connection with FIG. 1. The features that have already been described above will not be repeated. Particularly, FIG. 2 shows the battery manufacturing system 100 during a resting phase as described herein.

The battery manufacturing system 100 as shown in FIG. 2 in addition comprises a supporting device 150 that is configured to support the battery material M in the sensing area A1. The supporting device 150 may contribute to flattening of the battery material M within the sensing area A1. In particular, a tension may be maintained along the battery material M, for example by a tension-controlled feed system of the transport device 120, and the supporting device 150 may provide a (flat) structure on (or over) which the battery material M can span under tension. The supporting device 150 may contribute to increasing a detection accuracy of the marking object T within the sensing area A1.

The supporting device 150 may comprise one or more rails, one or more plates, one or more rigid sheets, one or more boards, one or more stages, or the like to provide a flat surface facing the battery material M so that the battery material M can rest upon.

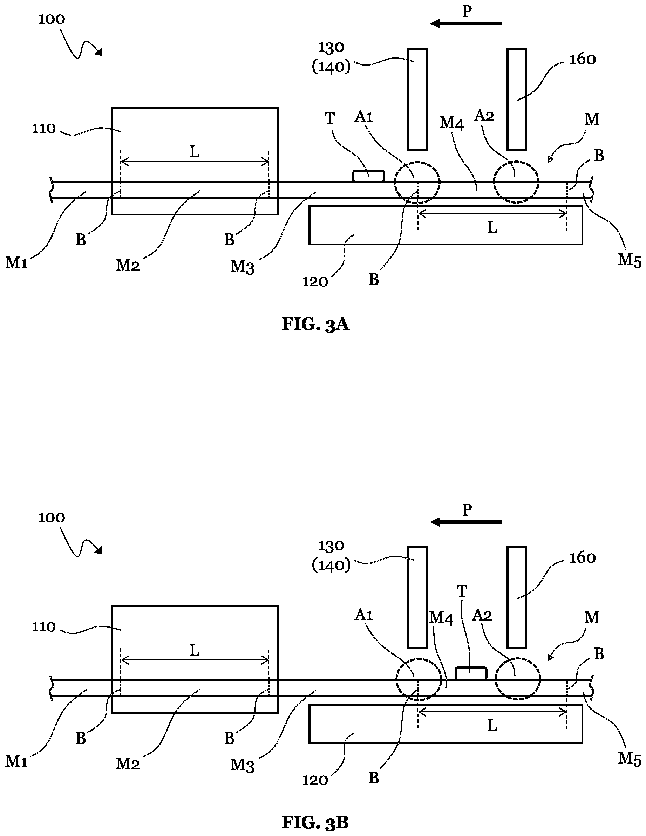

FIG. 3A to 3C show schematic views of a battery manufacturing system 100 according to an example. The battery manufacturing system 100 of FIG. 3A-3C may be provided as described above and comprise the features of the battery manufacturing system 100 as described above in connection with FIG. 1 or 2. The features that have already been described above will not be repeated. Particularly, FIG. 3A-3C shows the battery manufacturing system 100 during a resting phase as described herein.

The battery manufacturing system 100 as shown in FIG. 3A-3C further comprises an offset sensor device 160. The offset sensor device 160 may be configured to detect the marking object T on the battery material M at an offset sensing area A2. The offset sensing area A2 may be located upstream of the processing device 110 in the transport direction P and also upstream of the sensing area A1. The offset sensor device 160 and the offset sensing area A2 may be provided as described above.

Generally, a distance (i.e., the offset distance as described herein) between the offset sensing area A2 and the sensing area A1 may be selected freely depending on the requirements to the battery manufacturing. In specific examples as shown in FIG. 3A-3C, the offset distance between the sensing area A1 and the offset sensing area A2 are smaller than the length L of a single segment M1-M5 of the battery material M in the transport direction P.

In the battery manufacturing system 100 as shown in FIG. 3A-3C, where the offset sensing area A2 is located upstream of the sensing area A1 in the transport direction P, the battery manufacturing system 100 may further comprise a control unit (not shown in FIG. 3A-3C).

The control unit of the battery manufacturing system 100 as shown in FIG. 3A-3C may be configured to output, if the sensor device 130 and the offset sensor device 160 both detect the marking object T during an advancing phase, as illustrated in FIG. 3A, that the segment M3 of the battery material M which has passed the sensing area A1 in that advancing phase carries the marking object T.

Additionally or alternatively, the control unit may be configured to output, if the offset sensor device 160 detects the marking object T during an advancing phase without the sensor device 130 detecting the marking object T, that the marking object T is located between the sensing area A1 and the offset sensing area A2, as shown in FIG. 3B, and that the segment M4 of the battery material M that covers an area between the sensing area A1 and the offset sensing area A2 during a subsequent resting phase carries the marking object T.

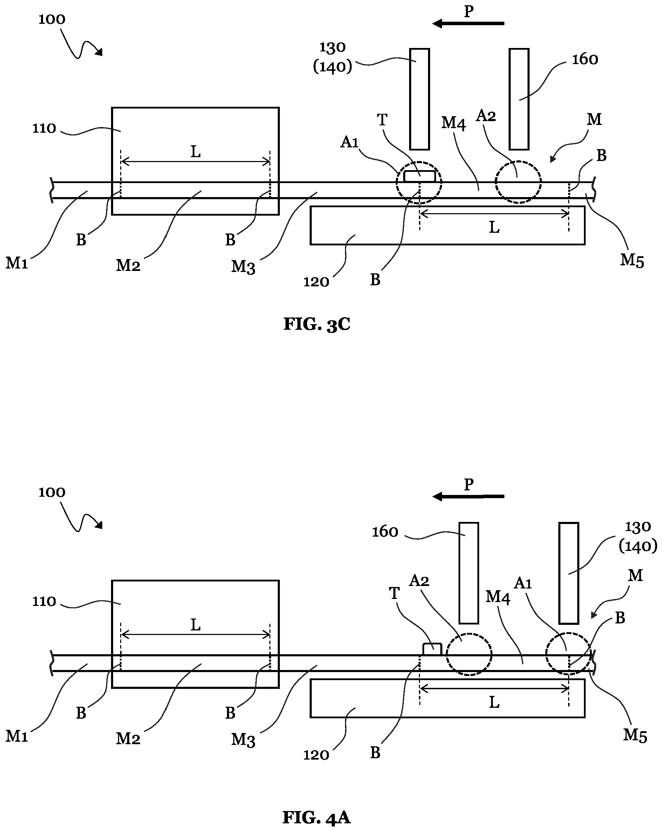

Additionally or alternatively, the control unit may be configured to output, if the offset sensor device 160 and the sensor device 130 both detect the marking object T during an advancing phase and the sensor device 130 detects the marking object T in a lasting manner during a subsequent resting phase, that the marking object T extends over both segments M3 and M4 of the battery material M, as shown in FIG. 3C, that are contiguous to the boundary B with which the sensing area 130 is aligned during this resting phase.

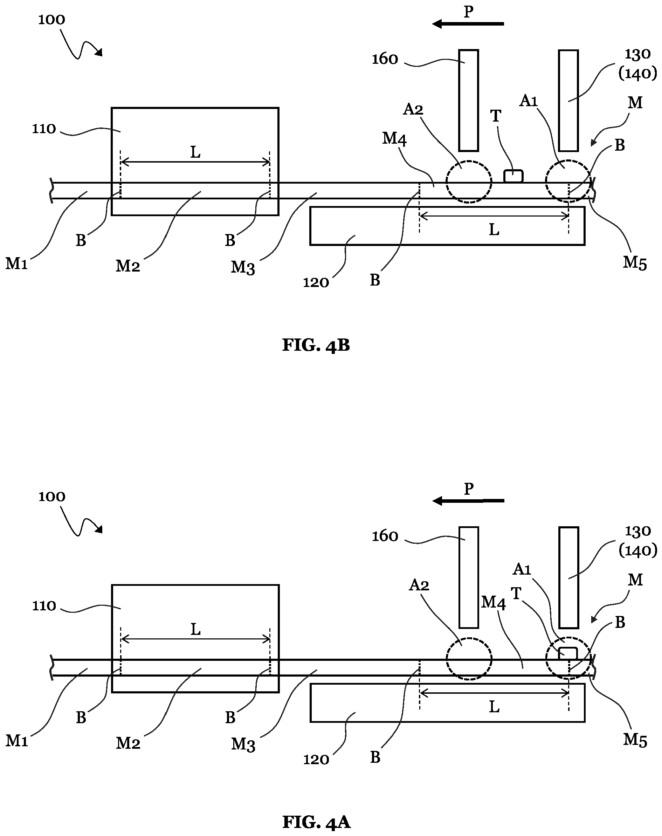

FIG. 4A to 4C show schematic views of a battery manufacturing system 100 according to an example. The battery manufacturing system 100 of FIG. 4A-4C may be provided as described above and comprise the features of the battery manufacturing system 100 as described above in connection with FIG. 1 or 2. The features that have already been described above will not be repeated. Particularly, FIG. 4A-4C shows the battery manufacturing system 100 during a resting phase as described herein.

The battery manufacturing system 100 as shown in FIG. 4A-4C further comprises an offset sensor device 160. The offset sensor device 160 may be configured to detect the marking object T on the battery material M at an offset sensing area A2. The offset sensing area A2 may be located upstream of the processing device 110 in the transport direction P and downstream of the sensing area A1. The offset sensor device 160 and the offset sensing area A2 may be provided as described above.

Generally, a distance (i.e., the offset distance as described herein) between the offset sensing area A2 and the sensing area A1 may be selected freely depending on the requirements to the battery manufacturing. In specific examples as shown in FIG. 4A-4C, the offset distance between the sensing area A1 and the offset sensing area A2 are smaller than the length L of a single segment M1-M5 of the battery material M in the transport direction P.

In the battery manufacturing system 100 as shown in FIG. 4A-4C, where the offset sensing area A2 is located downstream of the sensing area A1 in the transport direction P, the battery manufacturing system 100 may further comprise a control unit (not shown in FIG. 4A-4C).

The control unit of the battery manufacturing system 100 as shown in FIG. 4A-4C may be configured to output, if the sensor device 130 and the offset sensor device 160 both detect the marking object T during an advancing phase, as illustrated in FIG. 4A, that the segment M4 of the battery material M which has passed the sensing area A1 (and is positioned so as to extend between the sensing area A1 and the offset sensing area A2) in that advancing phase carries the marking object T.

The control unit of the battery manufacturing system 100 as shown in FIG. 4A-4C may be configured to output, if the sensor device 130 detects the marking object T during an advancing phase without the offset sensor device 160 detecting it, that the marking object T is located between the offset sensing area A2 and the sensing area A1 as shown in FIG. 4B, and that the segment M4 of the battery material M that covers an area between the sensing area A1 and the offset sensing area A2 during a subsequent resting phase carries the marking object T.

The control unit of the battery manufacturing system 100 as shown in FIG. FIG. 4A-4C may be configured to output, if the sensor device 130 detects the marking object T in a lasting manner during a subsequent resting phase, that the marking object T extends over both segments M4 and M5 of the battery material M, as shown in FIG. 4C, that are contiguous to the boundary B with which the sensing area A1 is aligned during this resting phase.

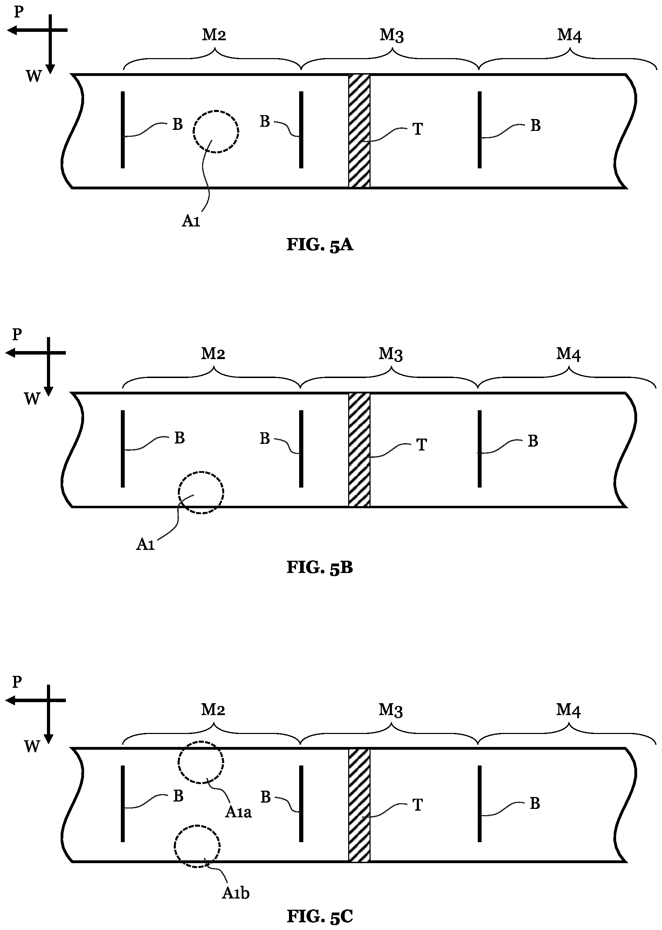

FIG. 5A to 5C show schematic views of one or more sensing areas A1, A1a and A1b with respect to a battery material M in a plan view according to examples.

In the example shown in FIG. 5A, the sensing area A1 may be located at a central or middle position with respect to a width direction W. In this manner, the marking object T may be detected by the sensor device when passing through the sensing area A1.

In the example shown in FIG. 5B, the sensing area A1 may be located at a position close to one edge of the battery material M. In this manner, the marking object T may be detected by the sensor device when passing through the sensing area A1.

In the example shown in FIG. 5C, the battery manufacturing system may comprise two sensor devices (not shown in FIG. 5C), each of which may be arranged and configured as described herein. Each of the sensor devices 130 may be or comprise a light intensity sensor configured to measure a light intensity reflected at the battery material M and the marking object T in the respective sensing area A1a and A1b within a wavelength range of 380 to 700 nm. For example, one of the sensor devices may be arranged so that a first sensing area A1a is located near or covering one edge of the battery material M, while the other one of the sensor devices may be arranged so that a second sensing area A1b is located near or covering an opposite edge of the battery material M. In this manner, the marking object T may be detected by the sensor device when passing through any of the sensing areas A1a and A1b.

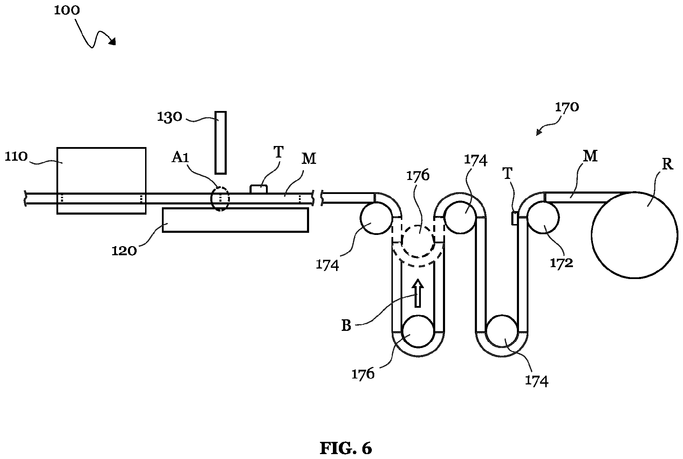

FIG. 6 shows a schematic view of a battery manufacturing system 100 according to an example. The battery manufacturing system 100 of FIG. 6 may be provided as described above and comprise the features of the battery manufacturing system 100 as described above in connection with any of FIG. 1 to 5C. The features that have already been described above will not be repeated.

The battery manufacturing system 100 as shown in FIG. 6 further comprises a buffer system 170 configured to buffer a portion of the battery material M and to provide the battery material M without unwinding a roll R of battery material M. The buffer system 170 may be also referred to as an accumulator system in the context of buffering the battery material M and releasing the buffered battery material M on demand.

The buffer system 170 may comprise at least one tension roller 172 that is configured to receive the battery material M from the roll R and to maintain a tension along the battery material M. The buffer system 170 may further comprise one or more further tension rollers 174 arranged distanced from one another and configured to maintain a tension along the battery material M.

The buffer system 170 may further comprise at least one movable roller 176 that is configured to be arranged at a fixed position and to maintain a tension along the battery material M. With the battery material M being guided over the plurality of the rollers 172-176 of the buffer system 170, the buffer system 170 is configured to buffer the battery material M. On demand, the buffered battery material M can be released, i.e., supplied to the processing device 110, without unwinding the roll R by moving the movable roller 176 so as to shorten a path of the battery material M between the roll R and the processing device 110. This movement of the movable roller 176 is illustrated in FIG. 6 by an arrow B.

Accordingly, an operator and/or the battery manufacturing system 100 may be given time for operating on the components of the battery manufacturing system 100. For example, the roll R may be replaced while the buffered battery material M is released. For example, an adhesive tape may be attached to connect a starting end of a new roll of battery material M to a final portion of a depleting roll of battery material M as described above while the buffered battery material M is released. For example, a setting of the battery manufacturing system 100 may be changed while the buffered battery material M is released.

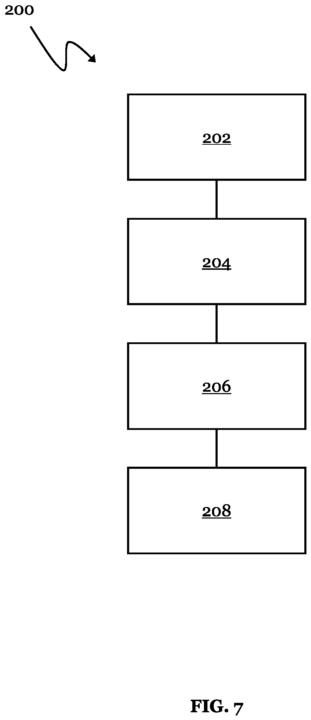

FIG. 7 shows a flow chart of a battery manufacturing method 200 according to an example. The battery manufacturing method 200 may incorporate any one, some or all of the features as described above. Moreover, the battery manufacturing method 200 may be carried out using the battery manufacturing system as disclosed herein, in particular any battery manufacturing system 100 as described above in connection to FIG. 1 to 6, and may incorporate any one, some or all of the features described with respect to the battery manufacturing system, unless technically inappropriate.

The battery manufacturing method 200 comprises providing 202 a battery material as a continuous material. The battery material may be provided and configured as described above. The expression continuous material may be used as described above.

The battery manufacturing method 200 comprises processing 204 the battery material in successive segments by processing one segment of the battery material at a time before processing a subsequent segment. The expressions and features regarding the processing of the material in successive segments may be as described above. The segments of the battery material may defined and processed be as described above. In particular, the processing 204 may be performed using the processing device as disclosed herein, and any one, some or all of the corresponding features apply to this method step.

The battery manufacturing method 200 comprises advancing 204 the battery material in a stepwise manner in a transport direction, alternating between an advancing phase and a resting phase, the resting phase being synchronized with the processing of the battery material. The advancing of the battery material in a stepwise manner may be as described herein. The advancing phase and the resting phase may be implemented as described herein. In particular, the advancing 204 may be performed using the transport device as disclosed herein, and any one, some or all of the corresponding features apply to this method step.

The battery manufacturing method 200 comprises determining 208 whether a marking object on the battery material is detected in a sensing area that is located prior to the processing of the battery material and aligned with a boundary between two successive segments of the battery material in the resting phase. The marking object may be provided and configured as described herein. The sensing area may be arranged and configured as described herein. The boundary between two successive segments of the battery material may be determined as described herein. In particular, the detecting of the marking object in the sensing area may be performed using the sensor device as disclosed herein, and any one, some or all of the corresponding features apply to this method step.

## Claims

1. A battery manufacturing system, comprising:
a processing device configured to process a battery material that is provided as a continuous material, wherein the processing device is configured to process the battery material in successive segments by processing one segment of the battery material at a time before processing a subsequent segment;
a transport device configured to advance the battery material in a stepwise manner in a transport direction, alternating between an advancing phase and a resting phase, the resting phase being synchronized with processing of a segment by the processing device; and
a sensor device configured to detect a marking object on the battery material in a sensing area, wherein the sensor device is arranged so that the sensing area is located upstream of the processing device in the transport direction and aligned with a boundary between two successive segments of the battery material when the transport device is in the resting phase.

2. The battery manufacturing system of claim 1, further comprising:
an offset sensor device configured to detect the marking object on the battery material at an offset sensing area,
wherein the offset sensing area is located upstream of the processing device in the transport direction and either upstream or downstream of the sensing area.

3. The battery manufacturing system of claim 2,
wherein the offset sensing area is distanced from the sensing area by an offset distance that is smaller than a length of a single segment of the battery material in the transport direction.

4. The battery manufacturing system of any of the preceding claims, further comprising:
a control unit configured to output, upon detecting the marking object on the battery material during an advancing phase, that:
one segment of the battery material which has been advanced past the sensing area during the advancing phase carries the marking object; and/or
another one segment of the battery material that successively follows said one segment of the battery material carries the marking object.

5. The battery manufacturing system of claim 3, wherein the offset sensing area is located upstream of the sensing area in the transport direction, the battery manufacturing system further comprising a control unit configured to output:
if the sensor device and the offset sensor device both detect the marking object during an advancing phase, that the segment of the battery material which has passed the sensing area in that advancing phase carries the marking object;
if the offset sensor device detects the marking object during an advancing phase without the sensor device detecting the marking object, that the marking object is located between the sensing area and the offset sensing area, and that the segment of the battery material that covers an area between the sensing area and the offset sensing area during a subsequent resting phase carries the marking object; and
if the offset sensor device and the sensor device both detect the marking object during an advancing phase and the sensor device detects the marking object in a lasting manner during a subsequent resting phase, that the marking object extends over both segments of the battery material that are contiguous to the boundary with which the sensing area is aligned during this resting phase.

6. The battery manufacturing system of claim 3, wherein the offset sensing area is located downstream of the sensing area in the transport direction, the battery manufacturing system further comprising a control unit configured to output:
if the sensor device and the offset sensor device both detect the marking object during an advancing phase, that the segment of the battery material that covers an area between the sensing area and the offset sensing area during a subsequent resting phase carries the marking object;
if the sensor device detects the marking object during an advancing phase without the offset sensor device detecting it, that the marking object is located between the offset sensing area and the sensing area, and that the segment of the battery material that covers an area between the sensing area and the offset sensing area during a subsequent resting phase carries the marking object; and
if the sensor device detects the marking object in a lasting manner during a subsequent resting phase, that the marking object extends over both segments of the battery material that are contiguous to the boundary with which the sensing area is aligned during this resting phase.

7. The battery manufacturing system of any of the preceding claims, further comprising:
a segmentation device configured to deform and/or cut the battery material into successive segments.

8. The battery manufacturing system of any of the preceding claims, further comprising:
a supporting device configured to support the battery material in the sensing area.

9. The battery manufacturing system of any of the preceding claims,
wherein the sensor device comprises a light intensity sensor or two light optical sensors configured to measure a light intensity reflected at the battery material and the marking object in the sensing area within a wavelength range of 380 to 700 nm.

10. The battery manufacturing system of any of the preceding claims,
wherein the battery material is a pouch film provided in a continuous form,
wherein the processing device comprises a pouch forming die configured to deform a pouch film of a battery.

11. A battery manufacturing method, comprising:
providing a battery material as a continuous material;
processing the battery material in successive segments by processing one segment of the battery material at a time before processing a subsequent segment;
advancing the battery material in a stepwise manner in a transport direction, alternating between an advancing phase and a resting phase, the resting phase being synchronized with the processing of the battery material;
determining whether a marking object on the battery material is detected in a sensing area that is located prior to the processing of the battery material and aligned with a boundary between two successive segments of the battery material in the resting phase.

12. The battery manufacturing method of claim 11, further comprising:
outputting, if detecting the marking object on the battery material during an advancing phase, that:
one segment of the battery material which has been advanced past the sensing area during the advancing phase carries the marking object; and/or
another one segment of the battery material that successively follows said one segment of the battery material carries the marking object.

13. The battery manufacturing method of claim 11 or 12, further comprising:
determining whether the marking object is detected at an offset sensing area, wherein the offset sensing area is located upstream of the processing device, and upstream or downstream of the sensing area in the transport direction, and distanced from the sensing area by an offset distance that is smaller than a length of a single segment of the battery material in the transport direction.

14. The battery manufacturing method of claim 13,
wherein the offset sensing area is located upstream of the sensing area in the transport direction, the method comprising:
outputting, if the sensor device and the offset sensor device both detect the marking object during an advancing phase, that the segment of the battery material which has passed the sensing area in that advancing phase carries the marking object;
outputting, if the offset sensor device detects the marking object during an advancing phase without the sensor device detecting the marking object, that the marking object is located between the sensing area and the offset sensing area, and that the segment of the battery material that covers an area between the sensing area and the offset sensing area during a subsequent resting phase carries the marking object; and
outputting, if the offset sensor device and the sensor device both detect the marking object during an advancing phase and the sensor device detects the marking object in a lasting manner during a subsequent resting phase, that the marking object extends over both segments of the battery material that are contiguous to the boundary with which the sensing area is aligned during this resting phase.

15. A battery manufactured using the battery manufacturing system of any of claims 1 to 12 and/or by the battery manufacturing method of any of claims 12 to 14.

## Amended claims

### Amended claims in accordance with Rule 137(2) EPC.

1. A battery manufacturing system (100), comprising:
a processing device (110) configured to process a battery material (M) that is provided as a continuous material, wherein the processing device (110) is configured to process the battery material (M) in successive segments (M-M5) by processing one segment (M1-M5) of the battery material (M) at a time before processing a subsequent segment, wherein the processing device (110) is configured to process each of the segments (M1-M5) of the battery material (M) individually in a successive order and in an identical manner;
a transport device (100) configured to advance the battery material (M) in a stepwise manner in a transport direction (P), alternating between an advancing phase and a resting phase, the resting phase being synchronized with processing of a segment (M1-M5) by the processing device (110); and
a sensor device (130) configured to detect a marking object (T) on the battery material (M) in a sensing area (A1), wherein the sensor device (130) is arranged so that the sensing area (A1) is located upstream of the processing device (110) in the transport direction (P) and aligned with a boundary (B) between two successive segments (M1-M5) of the battery material (M) when the transport device (100) is in the resting phase.

2. The battery manufacturing system of claim 1, further comprising:
an offset sensor device (160) configured to detect the marking object (T) on the battery material (M) at an offset sensing area (A2),
wherein the offset sensing area (A2) is located upstream of the processing device (110) in the transport direction (P) and either upstream or downstream of the sensing area (A1).

3. The battery manufacturing system of claim 2,
wherein the offset sensing area (A2) is distanced from the sensing area (A1) by an offset distance that is smaller than a length (L) of a single segment (M1-M5) of the battery material (M) in the transport direction (P).

4. The battery manufacturing system of any of the preceding claims, further comprising:
a control unit (A2) configured to output, upon detecting the marking object (T) on the battery material (M) during an advancing phase, that:
one segment (M1-M4) of the battery material (M) which has been advanced past the sensing area (A1) during the advancing phase carries the marking object (T); and/or
another one segment (M2-M5) of the battery material (M) that successively follows said one segment (M1-M4) of the battery material (M) carries the marking object (T).

5. The battery manufacturing system of claim 3, wherein the offset sensing area (A2) is located upstream of the sensing area (A1) in the transport direction (P), the battery manufacturing system (100) further comprising a control unit (A2) configured to output:
if the sensor device (130) and the offset sensor device (160) (130) both detect the marking object (T) during an advancing phase, that the segment (M1-M5) of the battery material (M) which has passed the sensing area (A1) in that advancing phase carries the marking object (T);
if the offset sensor device (160) (130) detects the marking object (T) during an advancing phase without the sensor device (130) detecting the marking object (T), that the marking object (T) is located between the sensing area (A1) and the offset sensing area (A2), and that the segment (M1-M5) of the battery material (M) that covers an area between the sensing area (A1) and the offset sensing area (A2) during a subsequent resting phase carries the marking object (T); and
if the offset sensor device (160) (130) and the sensor device (130) both detect the marking object (T) during an advancing phase and the sensor device (130) detects the marking object (T) in a lasting manner during a subsequent resting phase, that the marking object (T) extends over both segments (M1-M5) of the battery material (M) that are contiguous to the boundary (B) with which the sensing area (A1) is aligned during this resting phase.

6. The battery manufacturing system of claim 3, wherein the offset sensing area (A2) is located downstream of the sensing area (A1) in the transport direction (P), the battery manufacturing system further comprising a control unit (A2) configured to output:
if the sensor device (130) and the offset sensor device (160) (130) both detect the marking object (T) during an advancing phase, that the segment (M1-M5) of the battery material (M) that covers an area between the sensing area (A1) and the offset sensing area (A2) during a subsequent resting phase carries the marking object (T);
if the sensor device (130) detects the marking object (T) during an advancing phase without the offset sensor device (160) (130) detecting it, that the marking object (T) is located between the offset sensing area (A2) and the sensing area (A1), and that the segment (M1-M5) of the battery material (M) that covers an area between the sensing area (A1) and the offset sensing area (A2) during a subsequent resting phase carries the marking object (T); and
if the sensor device (130) detects the marking object (T) in a lasting manner during a subsequent resting phase, that the marking object (T) extends over both segments (M1-M5) of the battery material (M) that are contiguous to the boundary (B) with which the sensing area (A1) is aligned during this resting phase.

7. The battery manufacturing system of any of the preceding claims, further comprising:
a segmentation device (140) configured to deform and/or cut the battery material (M) into successive segments (M1-M5).

8. The battery manufacturing system of any of the preceding claims, further comprising:
a supporting device (150) configured to support the battery material (M) in the sensing area (A1).

9. The battery manufacturing system of any of the preceding claims,
wherein the sensor device (130) comprises a light intensity sensor or two light optical sensors configured to measure a light intensity reflected at the battery material (M) and the marking object (T) in the sensing area (A1) within a wavelength range of 380 to 700 nm.

10. The battery manufacturing system of any of the preceding claims,
wherein the battery material (M) is a pouch film (M) provided in a continuous form, wherein the processing device (110) comprises a pouch forming die configured to deform a pouch film (M) of a battery.

11. A battery manufacturing method (200), comprising:
Providing (202) a battery material (M) as a continuous material;
processing (204) the battery material (M) in successive segments (M1-M5) by processing one segment (M1-M4) of the battery material (M) at a time before processing a subsequent segment (M2-M5), wherein the processing device (110) processes each of the segments (M1-M5) of the battery material (M) individually in a successive order and in an identical manner;
advancing (206) the battery material (M) in a stepwise manner in a transport direction (P), alternating between an advancing phase and a resting phase, the resting phase being synchronized with the processing (204) of the battery material (M);
determining (208) whether a marking object (T) on the battery material (M) is detected in a sensing area (A1) that is located prior to the processing (204) of the battery material (M) and aligned with a boundary (B) between two successive segments (M1-M5) of the battery material (M) in the resting phase.

12. The battery manufacturing method of claim 11, further comprising:
outputting, if detecting the marking object (T) on the battery material (M) during an advancing phase, that:
one segment (M1-M4) of the battery material (M) which has been advanced past the sensing area (A1) during the advancing phase carries the marking object (T); and/or
another one segment (M2-M5) of the battery material (M) that successively follows said one segment (M1-M4) of the battery material (M) carries the marking object (T).

13. The battery manufacturing method of claim 11 or 12, further comprising:
determining whether the marking object (T) is detected at an offset sensing area (A2), wherein the offset sensing area (A2) is located upstream of the processing device (110), and upstream or downstream of the sensing area (A1) in the transport direction (P), and distanced from the sensing area (A1) by an offset distance that is smaller than a length (L) of a single segment (M1-M5) of the battery material (M) in the transport direction (P).

14. The battery manufacturing method of claim 13,
wherein the offset sensing area (A2) is located upstream of the sensing area (A1) in the transport direction (P), the method comprising:
outputting, if the sensor device (130) and the offset sensor device (160) both detect the marking object (T) during an advancing phase, that the segment (M1-M5) of the battery material (M) which has passed the sensing area (A1) in that advancing phase carries the marking object (T);
outputting, if the offset sensor device (160) detects the marking object (T) during an advancing phase without the sensor device (130) detecting the marking object (T), that the marking object (T) is located between the sensing area (A1) and the offset sensing area (A2), and that the segment (M1-M5) of the battery material (M) that covers an area between the sensing area (A1) and the offset sensing area (A2) during a subsequent resting phase carries the marking object (T); and
outputting, if the offset sensor device (160) and the sensor device (130) both detect the marking object (T) during an advancing phase and the sensor device (130) detects the marking object (T) in a lasting manner during a subsequent resting phase, that the marking object (T) extends over both segments (M1-M5) of the battery material (M) that are contiguous to the boundary (B) with which the sensing area (A1) is aligned during this resting phase.

15. A battery manufactured using the battery manufacturing system (100) of any of claims 1 to 12 and/or by the battery manufacturing method (200) of any of claims 12 to 14.
